# EUROPÄISCHE PATENTSCHRIFT

(11) **EP 1 842 700 B1**
(45) Veröffentlichungstag und Bekanntmachung des Hinweises auf die Patenterteilung: **11.11.2009**
(21) Anmeldenummer: 07006521.4
(22) Anmeldetag: 29.03.2007
(51) Int. Cl.: B60G 7/02, B60G 9/00, B62D 61/12

(54) **Fahrzeugachse**
Vehicle axle
Essieu de véhicule

(30) Priorität: 04.04.2006 DE 102006015672
(43) Veröffentlichungstag der Anmeldung: 10.10.2007
(60) Teilanmeldung: 09170452.8
(73) Patentinhaber: BPW Bergische Achsen KG, 51674 Wiehl (DE)
(72) Erfinder: Siebel, Reiner, 53809 Ruppichteroth (DE); Schwarz, Michael, 51469 Bergisch Gladbach (DE)
(74) Vertreter: Christophersen & Partner

(56) Entgegenhaltungen:
- EP-A1- 1 300 265
- EP-A1- 1 625 955
- EP-A2- 1 134 047
- EP-B1- 0 961 726
- WO-A-02/21012
- WO-A-98/38074
- WO-A-03/018334
- DE-A1- 1 962 276
- DE-A1- 10 055 859
- DE-B4- 10 053 411
- GB-A- 2 396 140
- US-A- 3 735 999
- US-A- 4 181 189
- US-B1- 6 585 223
- SETTMEIER D ET AL: "A NEW CONCEPT FOR INDEPENDENT WHEEL REAR AXLE WITH TWISTED TUBULAR CROSSBAR FITTED ON OUR PSA/FIAT MONOSPACE LA NOUVELLE CONCEPTION D'ESSIEU ARRIERE TUBULAIRE, A ROUES INDEPENDANTES, APPLIQUEE AU MONOSPACE PSA/FIAT" INGENIEURS DE L'AUTOMOBILE, EDITIONS VB, GARCHES, FR, Nr. 699, 1. August 1995 (1995-08-01), Seiten 71-74, XP000525390 ISSN: 0020-1200

## Beschreibung

Die Erfindung betrifft eine Fahrzeugachse, insbesondere für Schwerlastfahrzeuge, mit einem sich quer zur Fahrtrichtung erstreckenden Achskörper, der ein Achsrohr ist, und zwei Längslenkern, die jeweils mit ihrem einen Ende chassisfest angelenkt und mit ihrem anderen Ende von vorne her gegen das Achsrohr befestigt sind.

Aus der WO 03/018334 A1 ist eine Fahrzeugachse bekannt, bei der die Längslenker auf beiden Seiten des Fahrzeugs mit ihrem vorderen Ende in einer Konsole unterhalb des Fahrzeugchassis angelenkt sind.

Am hinteren Ende der Längslenker ist ein rohrförmiges Anschlussstück angeformt, welches im Durchmesser in etwa dem des Achskörpers entspricht und von der Seite her gegen diesen verschweißt ist. Die Längslenker und das rohrförmige Anschlussstück sind in Schalenbauweise aus tiefgezogenen Ober- und Unterschalen zusammengesetzt, die entlang der Mittelebene des Lenkers gegeneinander verschweißt sind. Die Schweißnähte erstrecken sich beidseits des Längslenkers sowie des rohrförmigen Anschlussstücks, weshalb sich eine vergleichsweise große Schweißnahtlänge für die Längslenker bzw. deren Anbindung an den Achskörper ergibt. Dies gilt umso mehr für eine ebenfalls in der WO 03/018334 A1 beschriebene Achse, bei der die rohrförmigen Anschlusstücke von den Längslenkern bis hin zur Fahrzeugmitte verlängert und dort gegeneinander verschweißt sind. Bei einer solchen Konstruktion kann zwar auf einen separaten Achskörper verzichtet werden, jedoch ergeben sich lange Schweißnähte.

Aus der DE 100 53 411 B4 ist eine Fahrzeugachse bekannt, bei der die hinteren Enden der Längslenker einstückig in den Achskörper übergehen. Die beiden Längslenker sind daher gemeinsam mit dem gesamten Achskörper in Schalenbauweise gefertigt, weshalb sich ebenfalls lange Schweißnähte ergeben.

Bei Fahrzeugachsen hängt der Fertigungsaufwand wie auch die mit Kosten verbundene Fertigungszeit wesentlich von der Länge der Schweißverbindungen ab. Neben der reinen Schweißzeit ist auch die Schweißnahtvorbereitung zeitaufwendig und kostenintensiv.

Eine Fahrzeugachse mit den im Oberbegriff angegebenen Merkmalen ist aus der EP 1 625 955 A1 bekannt. Als Achskörper dient ein durchgehendes Achsrohr, auf das zur Verbindung mit den beiden Längslenkern Halbschalen aufgeschweißt sind. Die in Fahrtrichtung vordere dieser beiden Halbschalen bildet eine Anschlussfläche, gegen die der jeweilige Längslenker von vorne her verschweißt wird. Die Befestigung der beiden Halbschalen auf dem Achsrohr, die zudem zusätzlich miteinander verschweißt werden, erfordert einen hohen fertigungstechnischen Aufwand. Über die Länge der Halbschalen kommt es zudem zu einer Materialverdoppelung mit der Folge eines relativ hohen Gewichts des Achskörpers.

Es die **Aufgabe** der Erfindung, eine Fahrzeugachse der eingangs genannten Art anzugeben, die sich durch eine in fertigungstechnischer Hinsicht vorteilhafte Bauweise auszeichnet.

Zur **Lösung** wird bei einer Fahrzeugachse der eingangs genannten Art vorgeschlagen, dass an der Vorderseite des Achsrohrs Anschlüsse für die Längslenker angeformt sind, gegen die die Enden der Längslenker verschweißt sind, wobei die Anschlüsse von dem Achsrohrquerschnitt nach außen durchgestellte Ringbereiche von vorzugsweise kreisförmiger, elliptischer oder ovaler Gestalt sind, und sich im Übergang zwischen der Vorderseite und dem Ringbereich des Achsrohrs eine Rundung befindet.

Durch das Verschweißen der Längslenker gegen die Anschlüsse des rohrförmigen Achskörpers ergibt sich eine fertigungstechnisch vorteilhafte Fahrzeugachse. Insbesondere werden die erforderlichen Schweißnähte kurz gehalten. Das Ausbilden von Anschlüssen an der Vorderseite, d.h. dem im wesentlichen in Fahrtrichtung weisenden Mantelbereich des Achskörpers, erlaubt einen hinsichtlich des Kräfteverlaufs günstigen Übergang zwischen Längslenker und Achskörper. Kerbwirkungen im Übergang zwischen Längslenker und Achskörper werden vermieden. Von Vorteil für die mechanische Stabilität des Verbunds aus dem Achskörper sowie den beiden Längslenkern ist, dass die Anschlüsse von dem Achsrohrquerschnitt nach außen durchgestellte Ringbereiche von vorzugsweise kreisförmiger, elliptischer oder ovaler Gestalt sind. Durch das nach außen Durchstellen wird ein günstiger Kraftfluss erzielt und es werden Kerbspannungen im Anschlussbereich vermieden.

Weiter wird als Ausgestaltung vorgeschlagen, dass die Enden der Längslenker stumpf gegen die Anschlüsse verschweißt sein können, wodurch sich eine vergleichsweise einfache Nahtvorbereitung ergibt. Alternativ können die Längslenker auch in einer Überlapp-Verschweißung gegen entsprechende Anschlüsse verschweißt werden.

Da der Achskörper im Fahrbetrieb auf Torsion belastet wird, ist es für die Anbindung der Längslenker von Vorteil, wenn die längere Bezugsachse des elliptischen bzw. ovalen Ringbereiches parallel zur Längsrichtung des Achskörpers liegt.

Für ein definiertes Tordieren des Achskörpers im Fahrbetrieb ist es ferner von Vorteil, wenn der Achskörper zumindest auf einer Teillänge mit sich in dessen Längsrichtung erstreckenden Einbuchtungen versehen ist, die dessen Torsionssteifigkeit bereichsweise reduzieren. Von Vorteil ist, wenn sich derartige Einbuchtungen ausschließlich im Bereich zwischen den Anschlüssen erstrecken, so dass die mit den Anschlüssen versehenen Achskörperbereiche nicht der Torsion des mittleren Achskörperbereiches unterliegen, sondern sich vergleichsweise steif verhalten.

Eine weitere Ausgestaltung sieht bei Fahrzeugachsen mit Achslift vor, dass die Längslenker an ihrer Unterseite mit einer Abrollfläche versehen sind, die mit einer Hebevorrichtung zusammenwirkt. Die EP 0 961 726 B1 zeigt eine Achskonstruktion mit nach Art von Lenkerfedern gestalteten Längslenkern. Unterhalb des eigentlichen Lenkers ist ein Schwenkarm gelagert, der mit der mit der Hebevorrichtung zum Anheben der Achse zusammenwirkenden Abrollfläche versehen ist. Ein solches Bauteil ist durch Anformen der Abrollfläche direkt am Längslenker entbehrlich, wodurch sich die Gesamtbauteilzahl reduziert und sich eine weitere bauliche Vereinfachung der Fahrzeugachse im Falle einer Liftachse einstellt.

Vorteilhaft handelt es sich bei dem Längslenker um einen zumindest zum Achsrohr hin offenen Hohlkörper, was zu einer Reduktion des Gewichtes der Fahrzeugachse beiträgt.

Eine weitere Ausgestaltung sieht vor, dass der Längslenker aus einer oberen Schale und einer unteren Schale zusammengesetzt ist. Eine solche Schalenbauweise erlaubt den Einsatz komplex gestalteter Längslenker mit über deren Länge variablem Querschnitt für den Fall, dass eine einstückige Bauweise nicht oder nur mit deutlich höherem Fertigungsaufwand möglich wäre.

Eine weitere Ausgestaltung der Fahrzeugachse sieht vor, dass an der Rückseite des Achskörpers Tragarme an Anschlüsse angeschweißt sind. Auch für die im rückseitigen Mantelbereich der Fahrzeugachse vorgesehenen Tragarme zur Aufnahme z.B. eines Luftfaltenbalgs ergibt sich damit eine fertigungstechnisch vorteilhafte Anbindung an den Achskörper.

In diesem Zusammenhang ist es insbesondere von Vorteil, wenn sich die Anschlüsse für die Längslenker und für die Tragarme in Bezug auf den Achskörper gegenüberliegen.

Von Vorteil ist ferner eine Bauart mit einem sich quer zur Fahrtrichtung erstreckenden Achskörper und zwei Längslenkern, die jeweils mit ihrem einen Ende über einen sich quer zur Fahrtrichtung erstreckenden Bolzen an einer chassisfesten Konsole angelenkt, und mit ihrem anderen Ende mit dem Achskörper verbunden sind.

Bei einer solchen Fahrzeugachse ist von Vorteil, wenn die Enden der Längslenker jeweils gegen ein Buchsengehäuse verschweißt sind, durch das der Bolzen hindurchführt, und sich in dem Zwischenraum zwischen Bolzen und Buchsengehäuse ein Elastomerelement befindet.

Durch das Verschweißen der vorderen Enden der Längslenker gegen das Buchsengehäuse, welches innerhalb eines Elastomerelements den Bolzen aufnimmt, ergibt sich eine Fahrzeugachse mit fertigungstechnischen Vorteilen gegenüber dem Stand der Technik. Wenn Bestandteil des Buchsengehäuses eine flache Rückwand ist, und der jeweilige Längslenker an dieser Rückwand angeschweißt wird, werden die erforderlichen Schweißnähte kurz gehalten. Außerdem hat die durch die flache Rückwand verursachte unrunde Gestaltung des Buchsengehäuses den Vorteil, dass sich das darin bündig eingebettete Elastomerelement nicht in der Buchse verdrehen kann.

Weitere Einzelheiten und Vorteile einer erfindungsgemäßen Fahrzeugachse werden nachfolgend unter Zuhilfenahme der beigefügten Zeichnungen erläutert. Darin zeigen:
- Fig. 1: eine teils geschnittener Seitenansicht eine Fahrzeugachse, wobei diese vom Liftachstyp ist,
- Fig. 2: eine perspektivische Darstellung des Verbunds aus Achskörper, Längslenkern und Tragarmen,
- Fig. 3: eine Schnittdarstellung gemäß der in Fig. 2 mit III-III bezeichneten Schnittebene,
- Fig. 4: eine der Fig. 3 vergleichbare Schnittdarstellung, jedoch bei einer anderen Ausführungsform,
- Fig. 5: den Bereich V in Fig. 4 in vergrößertem Maßstab und
- Fig. 6: in einer weiteren Ausführungsform eine im Schnitt dargestellte Fahrzeugachse.

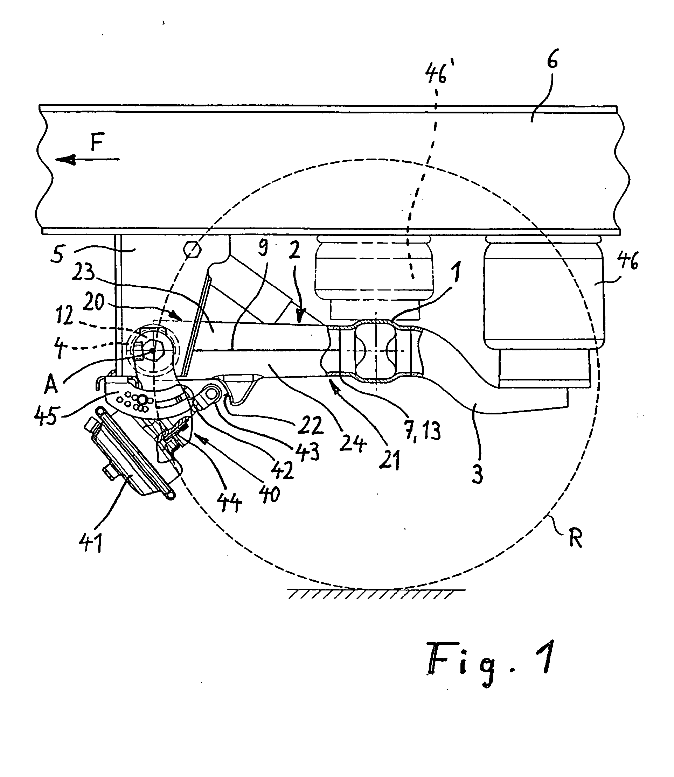

Eine erfindungsgemäße Fahrzeugachse für Schwerlastfahrzeuge, wie etwa Lkw-Anhänger, ist in Fig. 1 von der Seite her und teilweise geschnitten dargestellt. Wesentlicher Bestandteil der erfindungsgemäßen Fahrzeugachse ist ein sich von einer Seite des Fahrzeugs bis zur gegenüberliegenden Fahrzeugseite erstreckender, d.h. durchgehender Achskörper 1. An den Enden des Achskörpers 1 sind die Fahrzeugräder in bekannter Weise über z.B. Achsschenkel drehbar gelagert. Bei dem anhand der Ausführungen beschriebenen Achskörper 1 handelt es sich um ein im Querschnitt im wesentlichen quadratisch gestaltetes Vierkantrohr. Die Erfindung beschränkt sich jedoch nicht auf Vierkantrohre, vielmehr sollen Achskörper jedweden Querschnitts und insbesondere auch zylindrische Achsrohre mit eingeschlossen werden. Über eine Luftfeder 46, die auf einem nach hinten ragenden Tragarm 3 sitzt, ist der Achskörper 1 gegen ein Fahrzeug-Chassis 6 abgestützt. Die Luftfeder kann sich auch unmittelbar über dem Achskörper 1 befinden, vgl. hierzu die in Fig. 1 gestrichelt eingezeichnete Luftfeder 46'.

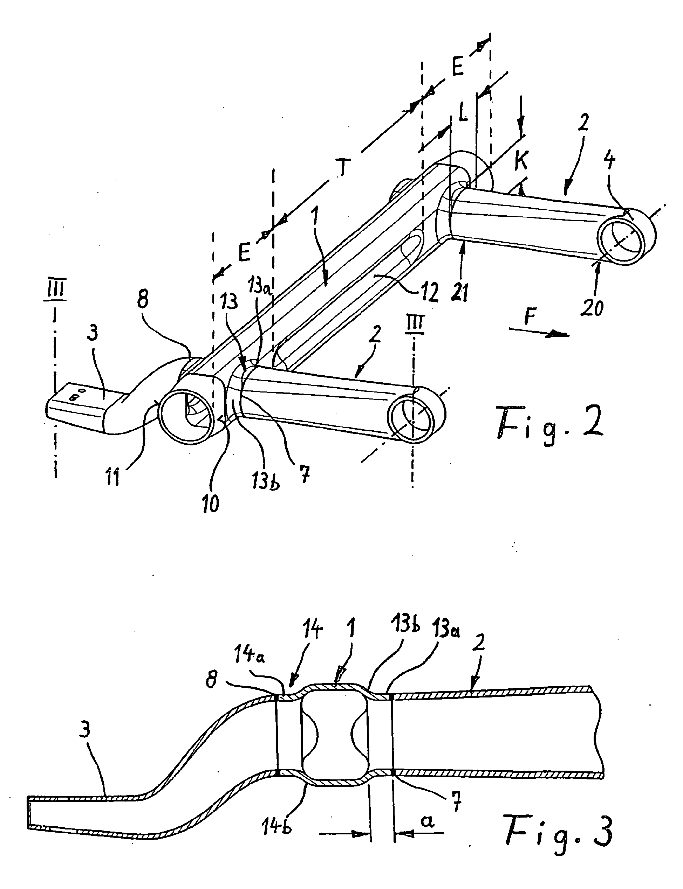

Mit dem durchgehenden Achsrohr 1 in dessen Endbereichen E (vgl. Fig. 2) starr verbunden sind zwei Längslenker 2. Diese sind an ihrem in Fahrtrichtung F betrachtet vorderen Ende 20 chassisfest angelenkt und mit ihrem rückwärtigen Ende 21 von vorne her gegen den Achskörper 1 oder gegen den Mantel des Achskörpers verschweißt. Zur chassisfesten Anlenkung jedes Längslenkers 2 dient eine unterhalb des Fahrzeug-Chassis 6 angeordnete Stütze 5, in welcher der Längslenker 2 um die in Fig. 1 mit A bezeichnete Achse schwenkbar gelagert ist. Diese Lagerung kann auch elastisch in einer vertikal nachgiebigen Gummibuchse 12 erfolgen.

Einzelheiten der Schweißverbindung 7 des hinteren Endes 21 des Längslenkers 2 mit dem Achskörper 1 werden später anhand der Fign. 2 und 3 ausführlich beschrieben.

Bei der in Fig. 1 dargestellten Fahrzeugachse handelt es sich um eine sogenannte Liftachse, die bei Bedarf über eine Hebevorrichtung 40 anhebbar ist, so dass die in Fig. 1 strichliniert angedeuteten Räder R den Kontakt zur Fahrbahn verlieren. Die Hebevorrichtung 40 ist unterhalb der Stütze 5 an einem Stützelement 45 festgelegt. Die Hebevorrichtung 40 setzt sich im wesentlichen zusammen aus einem Druckmittelzylinder 41, aus dem eine Kolbenstange 42, geführt von einer Führung 44, ein- bzw. ausfahrbar ist. Am Ende der Kolbenstange 42 sitzt eine frei drehbare, zylindrische Rolle 43, die an einer evolventenförmig gestalteten Abrollfläche 22 des Längslenkers 2 abrollt. Beim Ausfahren der Kolbenstange 42 rollt die Rolle 43 weitgehend querkraftfrei entlang der speziell geformten Abrollfläche 22, wodurch der Längslenker 2 und mit diesem der Achskörper 1 sowie auch die Fahrzeugräder nach oben verschwenkt werden. Bei Bedarf, z.B. bei beladenem Fahrzeuganhänger, wird die Kolbenstange 42 wieder eingefahren, bis sich die Rolle 43 vollständig von der Abrollfläche 22 löst. Dadurch senken sich die Fahrzeugräder R auf die Fahrbahn ab und das Gewicht der Ladung stützt sich auch über diese Achse ab. Einzelheiten der Funktionsweise einer Anhebevorrichtung sind in der EP 0 961 726 B1 beschrieben.

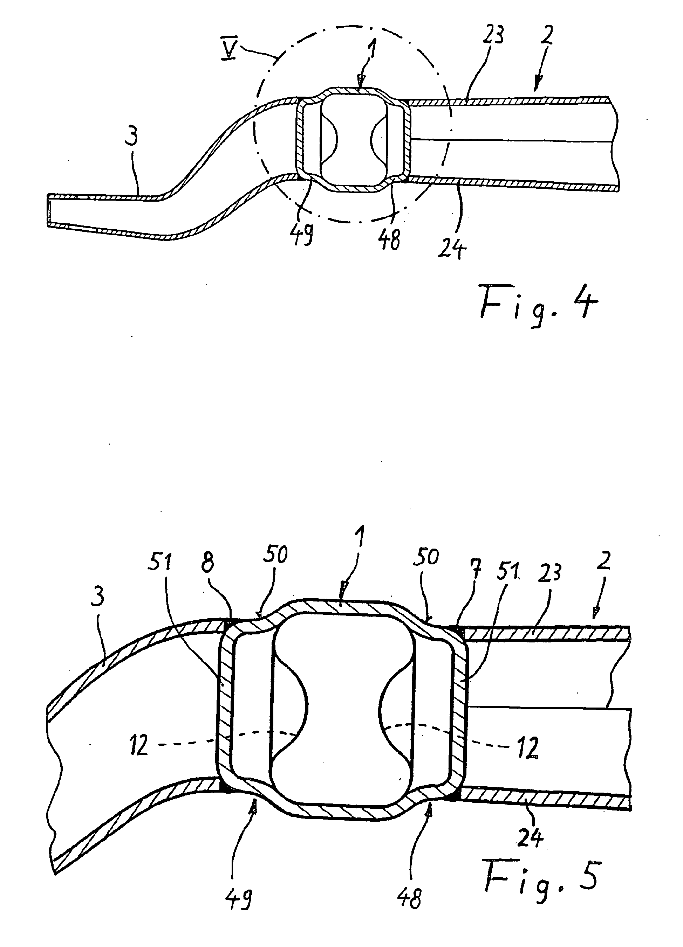

Der Längslenker 2 ist bei der Ausführung gemäß Fig. 1 und auch Fig. 4 in Schalenbauweise gefertigt, d.h. aus einer Oberschale 23 und einer Unterschale 24, die zu beiden Seiten über Schweißnähte 9 gegeneinander verschweißt sind. Die untere Schale 24 ist bei Fig. 1 mit einer muldenartigen Ausnehmung versehen, deren Oberfläche die Abrollfläche 22 für die Rolle 43 der Hebevorrichtung 40 bereitstellt, wohingegen die Oberschale 23 keine derartige Ausnehmung aufweist. Im Bereich der chassisfesten Anlenkung umschließt der Längslenker 2 eine zylindrische Hülse 4, über welche die höhenelastische Anlenkung in der Stütze 5 erfolgt. In der Hülse 4 befindet sich hierzu die höhenelastische Gummibuchse 12 (Fig. 1).

Die Schalenbauweise des Längslenkers 2 bietet sich für im Querschnitt komplex gestaltete Längslenker mit z.B. den beschriebenen evolventenförmigen Ausnehmungen 22 an. Ansonsten ist eine einstückige Bauart der Längslenker zu bevorzugen, wie sie z.B. in Fig. 2 dargestellt ist.

Einzelheiten der Verbindung des Achskörpers 1 mit den beiden Längslenkern 2 werden nachfolgend unter Zuhilfenahme der Fign. 2 und 3 erläutert.

Der Achskörper 1 ist an der in Fahrtrichtung F weisenden Vorderseite 10 mit Anschlüssen 13 versehen, an denen die sich quer zur Längsrichtung des Achskörpers 1 erstreckenden Längslenker 2 von vorne kommend angeschweißt sind. Die Anschlüsse 13 befinden sich an einem vom Achskörper 1 nach außen hin durchgestellten Ringbereich 13a, gegen den die gegenüberliegende Stirnfläche des Längslenkers 2 über eine Schweißnaht 7 stumpf verschweißt ist. Die Ringfläche 13a ist gegenüber der Mantelfläche des Achskörpers 1 erhaben und über einen gerundeten Übergang 13b mit dieser verbunden. Bei der Ausführung in Fig. 2 ist der Ringbereich 13a von in etwa ovaler bzw. elliptischer Gestalt. Die lange Achse L des Ringbereichs 13a erstreckt sich parallel zur Längsrichtung des Achskörpers 1, wohingegen die kurze Achse K quer zur Längsrichtung des Achskörpers 1 ausgerichtet ist. Aufgrund der elliptischen bzw. ovalen Anbindung ergibt sich eine gute mechanische Stabilität der Schweißverbindungen, worauf später noch im Einzelnen eingegangen werden wird.

Der perspektivischen Darstellung in Fig. 2 lässt sich ferner entnehmen, dass sich der Querschnitt des Längslenkers 2 über dessen Länge ändert. Während am hinteren Ende 21 des Längslenkers 2 die lange Achse L der Ellipse bzw. des Ovals noch mit der Längsrichtung des Achskörpers 1 fluchtet, drehen sich diese Verhältnisse über die Länge des Längslenkers 2 um in etwa 90°, d.h. am vorderen Ende 20 ist die lange Achse im wesentlichen quer zur Längsrichtung des Achskörpers 1 ausgerichtet. Auch handelt es sich nicht mehr um ein geometrisch exaktes Oval bzw. eine Ellipse. Vielmehr ist der Querschnitt in diesem Bereich einem Rechteck angenähert. Bei dem in Fig. 2 und in Fig. 3 dargestellten Längslenker 2 handelt es sich um einen einstückig durch Umformen eines ursprünglich zylindrischen Rohres hergestellten Längslenker 2. Ein Verschweißen von Ober- und Unterschale wie bei der Ausführung nach Fig. 1 oder Fig. 4 ist nicht erforderlich.

Am vorderen Ende 20 weist der Längslenker 2 eine im wesentlichen sichel- bzw. halbkreisförmige Öffnung auf, in die die Lagerhülse 4 eingeschweißt ist. Am rückseitigen Ende 21 ist der Lenker 2 stumpf gegen den Anschluss 13 bzw. gegen dessen ovalen bzw. elliptischen Ringbereich 13a verschweißt. Der Darstellung in Fig. 3 gut entnehmen lässt sich die Änderung des Lenkerquerschnitts über dessen Länge, der vom Bereich der Schweißung 7 bis hin zu dessen vorderem Ende 20 divergiert. Die Ringfläche 13a ist gegenüber der Vorderseite 10 des Achskörpers 1 (Fig. 1) um den Abstand a erhaben. Im Übergang zwischen Ringfläche 13a und Vorderseite 10 befindet sich eine Rundung 13b. Aufgrund dieser Ausgestaltung des Anschlusses 13 werden im Fahrbetrieb bei Belastung des Achse Kerbwirkungen zwischen den starr verschweißten Längslenkern 2 und dem sich im Mittelbereich tordierenden Achskörper 1 vermieden.

Der Achskörper 1 weist über eine Teillänge T, die den Mittelbereich des Achskörpers bildet, eine von dessen Vorderseite 10 nach innen weisende Einbuchtung 12 auf. Eine ähnliche Einbuchtung befindet sich auch auf der Rückseite 11. Die Einbuchtungen 12 sind mit gerundeten Übergängen versehen und z.B. durch Prägen hergestellt. Sie reduzieren die Torsionssteifigkeit des Achskörpers 1 und erlauben es dem Achskörper 1 beim Überfahren von z.B. Fahrbahnunebenheiten diese in Form einer Verformungsarbeit durch Tordieren aufzunehmen. Weitere Anteile der Verformungsarbeit können z.B. durch die elastische Buchse 12 (Fig. 1) in der Verbindungsstelle zwischen dem Längslenker 2 und der Stütze 5 aufgenommen werden. Die Einbuchtungen 12 erstrecken sich symmetrisch zur Achskörpermitte nur über eine Teillänge T. Die Endbereiche E sind nicht mit einer Einbuchtung versehen, weshalb sie im Fahrbetrieb nicht an der Torsion des übrigen Achskörpers teilnehmen. Die Endbereiche E führen vielmehr eine den Torsionen des mittleren Teils T folgende Drehbewegung aus, so dass der Bereich der Anschlüsse 13 frei von Torsionsspannungen bleibt.

Auf der Rückseite 11 sind die Tragarme 3 für die Aufnahme der Luftfeder 46 über Anschlüsse 14 ebenfalls durch Verschweißen befestigt. Auf Einzelheiten der Schweißverbindung 8 bzw. der Anschlüsse 14 wird zur Vermeidung unnötiger Wiederholungen auf die vorstehend ausführlich beschriebene Schweißverbindung 7 zwischen Längslenker 2 und Achskörper 1 verwiesen.

Sowohl die Anschlüsse 14 wie auch die Schweißnaht 8 sind identisch den Anschlüssen 13 bzw. der Schweißung 7. Die rückseitigen Anschlüsse 14 und die vorderseitigen Anschlüsse 13 liegen sich darüber hinaus deckungsgleich gegenüber.

Bei der Ausführungsform nach den Fign. 4 und 5 sind an dem Achskörper 1 anstelle der offenen Durchstellungen nach vorne und gegebenenfalls auch nach hinten ragende bzw. abstehende Befestigungsdome 48, 49 angeformt. Daran angesetzt und verschweißt sind die Halbschalen 23, 24 der Längslenker 2 bzw. der Tragarm 3. Durch die Form der wie Tafelberge aus der Querschnittskontur des Achskörpers 1 herausragenden Befestigungsdome 48, 49 ergeben sich an deren Flanken 50 günstige Schweißbadstützen für das Ziehen der Schweißnähte 7, 8. Die Befestigungsdome 48, 49 sind geschlossen dargestellt, jedoch können ihre flachen Mittelbereiche 51 auch offen sein.

Die Fahrzeugachse zeichnet sich gegenüber dem Stand der Technik insbesondere durch ihren einfachen und fertigungstechnisch vorteilhaften Aufbau aus. Insbesondere kann der Längslenker als einstückiges Bauteil hergestellt und über eine einzige, beispielsweise ovale oder elliptische Schweißnaht 7 von vorne her gegen den Achskörper 1 verschweißt werden.

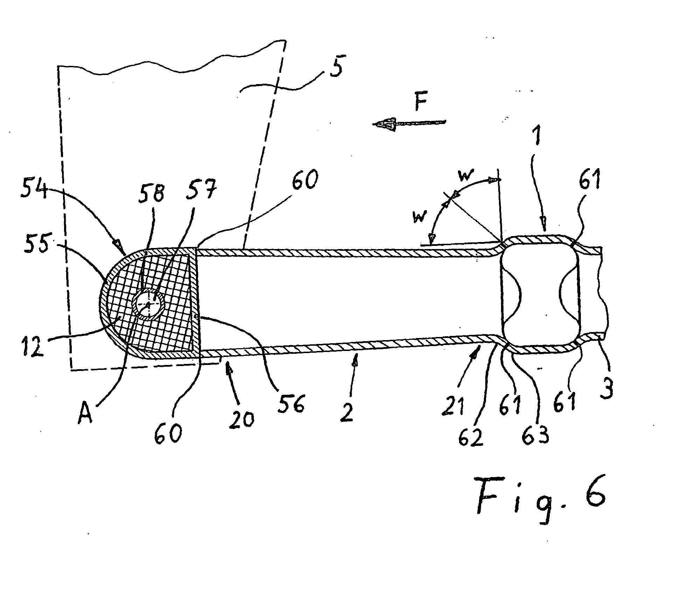

Die Figur 6 zeigt eine Möglichkeit, das vordere Ende des Längslenkers 2 gelenkig an der Konsole 5 des Fahrzeugchassis anzuordnen. Zu diesem Zweck ist das vordere Ende 20 des Längslenkers 2 an eine Rückwand 56 eines Buchsengehäuses 54 angeschweißt. Insgesamt setzt sich das Buchsengehäuse aus einer Halbrundwand 55 und der nach hinten weisenden, flachen Rückwand 56 zusammen. Die selbe Umfangsgestaltung weist das in dem Buchsengehäuse 54 angeordnete Elastomerelement 12 auf. Infolge dieser im Querschnitt unrunden Gestaltung des Buchsengehäuses 54 kann sich das darin bündig eingebettete Elastomerelement 12 nicht in der Buchse verdrehen. Auf diese Weise ist sichergestellt, dass das Elastomerelement 12, welches primär in vertikaler Richtung verformbar ist, seine Drehlage nicht ändert.

In dem Elastomerelement 12 sitzt eine Hülse 58, welche wiederum jenen Bolzen 57 umgibt, über den der Längslenker an der chassisfesten Konsole 5 angelenkt ist. Der Bolzen 57 fällt daher zusammen mit der Achse A (Fig. 1).

Da die Rückwand 56 des Buchsengehäuses 54 flach bzw. eben gestaltet ist, ist dort das Anschweißen das Längslenkers 2 entlang der Schweißnaht 60 fertigungstechnisch einfach möglich. Vor allem ist es möglich, den Längslenker 2 an seinem vorderen Ende ebenfalls eben zu gestalten, was die Fertigung auch des Längslenkers 2 vereinfacht. Wiederum ist es auch hier möglich, den Längslenker 2 zweiteilig aus einer Oberschale und einer Unterschale zusammenzusetzen.

Abweichend zu den Fahrzeugachsen nach den Fign. 1 bis 5 ist der Übergangsbereich zwischen Längslenker 2 und Achskörper 1. Die Schweißnaht 61 befindet sich hierbei in einem Winkel von ca. 45° zwischen einer Rundung 62 am hinteren Ende des Längslenkers 2, und einer entgegengesetzt gebogenen Rundung 63 am Achskörper 1. Die Anordnung der Schweißnaht 61 in einem Winkel von ca. 45° ist in Fig. 6 anhand der beiden Winkelbereiche w illustriert. Der Vorteil dieser Gestaltung liegt darin, dass der Achskörper 1 weniger stark verformt werden muss, um die Anschlussflächen für einerseits den Längslenker 2 und andererseits den Tragarm 3 bereitzustellen.

### Bezugszeichen

- 1: Achskörper
- 2: Längslenker
- 3: Tragarm
- 4: Hülse
- 5: Konsole
- 6: Chassis
- 7: Schweißnaht
- 8: Schweißnaht
- 9: Schweißnaht
- 10: Vorderseite
- 11: Rückseite
- 12: Elastomerelement
- 13: Anschluss
- 13a: Ringbereich
- 13b: Rundung, Übergang
- 14: Anschluss
- 14a: Ringbereich
- 14b: Rundung
- 20: vorderes Ende
- 21: hinteres Ende
- 22: Abrollfläche
- 23: obere Schale
- 24: untere Schale
- 40: Hebevorrichtung
- 41: Druckmittelzylinder
- 42: Kolbenstange
- 43: Rolle
- 44: Führung
- 45: Stützelement
- 46: Luftfeder
- 46': Luftfeder
- 48: Befestigungsdom
- 49: Befestigungsdom
- 50: Flanke
- 51: Mittelbereich
- 54: Buchsengehäuse
- 55: Halbrundwand
- 56: Rückwand
- 57: Bolzen
- 58: Hülse
- 60: Schweißnaht
- 61: Schweißnaht
- 62: Rundung
- 63: Rundung

- F: Fahrtrichtung
- L: lange Achse
- K: kurze Achse
- A: Achse
- T: Teillänge, Mittelbereich
- a: Abstand
- E: Endbereich
- R: (Fahrzeug)rad
- w: Winkel

## Patentansprüche

1. Fahrzeugachse, insbesondere für Schwerlastfahrzeuge, mit einem sich quer zur Fahrtrichtung (F) erstreckenden Achskörper, der ein Achsrohr (1) ist, und zwei Längslenkern (2), die jeweils mit ihrem einen Ende (20) chassisfest angelenkt und mit ihrem anderen Ende (21) von vorne her gegen das Achsrohr (1) befestigt sind,
**dadurch gekennzeichnet,**
**dass** an der Vorderseite (10) des Achsrohrs (1) Anschlüsse (13) für die Längslenker (2) angeformt sind, gegen die die Enden (21) der Längslenker (2) verschweißt sind, wobei die Anschlüsse (13) von dem Achsrohrquerschnitt nach außen durchgestellte Ringbereiche (13a) von vorzugsweise kreisförmiger, elliptischer oder ovaler Gestalt sind, und sich im Übergang zwischen der Vorderseite (10) und dem Ringbereich (13a) des Achsrohrs (1) eine Rundung (13b) befindet.

2. Fahrzeugachsen nach Anspruch 1, **dadurch gekennzeichnet, dass** die Enden (21) der Längslenker (2) stumpf gegen die Anschlüsse (13) verschweißt sind.

3. Fahrzeugachse nach Anspruch 1, **dadurch gekennzeichnet, dass** sich die längere Bezugsachse (L) des elliptischen bzw. ovalen Ringbereichs (13a) parallel zur Längsrichtung des Achskörpers (1) erstreckt.

4. Fahrzeugachse nach einem der vorangehenden Ansprüche, **dadurch gekennzeichnet, dass** der Achskörper (1) zumindest auf einer Teillänge (T) mit sich in dessen Längsrichtung erstreckenden Einbuchtungen (12) versehen ist.

5. Fahrzeugachse nach Anspruch 4, **dadurch gekennzeichnet, dass** sich die Einbuchtungen (12) ausschließlich im Bereich zwischen den Anschlüssen (13) erstrecken.

6. Fahrzeugachse nach einem der vorangehenden Ansprüche, **dadurch gekennzeichnet, dass** die Längslenker (2) an ihrer Unterseite mit einer Abrollfläche (22) versehen sind, die mit einer Hebevorrichtung (40) zusammenwirkt.

7. Fahrzeugachse nach einem vorangehenden Ansprüche, **dadurch gekennzeichnet, dass** der Längslenker (2) ein zumindest zum Achskörper (1) hin offener Hohlkörper ist.

8. Fahrzeugachse nach Anspruch 7, **dadurch gekennzeichnet, dass** der Längslenker (2) aus einer oberen Schale (23) und einer unteren Schale (24) zusammengesetzt ist.

9. Fahrzeugachse nach einem der vorangehenden Ansprüche, **dadurch gekennzeichnet, dass** an der Rückseite (11) des Achskörpers (1) Tragarme (3) an Anschlüssen (13) angeschweißt sind.

10. Fahrzeugachse nach Anspruch 9, **dadurch gekennzeichnet, dass** die Anschlüsse (13, 14) für die Längslenker (2) und für die Tragarme (3) sich in Bezug auf den Achskörper (1) einander gegenüberliegen.

11. Fahrzeugachse nach einem der vorangehenden Ansprüche, **dadurch gekennzeichnet, dass** die vorderen Enden (20) der Längslenker jeweils gegen ein Buchsengehäuse (54) verschweißt sind, durch das der den Längslenker am Fahrzeug anlenkende Bolzen (57) hindurchführt, und dass sich in dem Zwischenraum zwischen Bolzen (57) und Buchsengehäuse (54) ein Elastomerelement (21) befindet.

12. Fahrzeugachse nach Anspruch 11, **dadurch gekennzeichnet, dass** das Buchsengehäuse (54) und das darin angeordnete Elastomerelement (12) unrunde Querschnitte aufweisen.

13. Fahrzeugachse nach Anspruch 11 oder Anspruch 12, **dadurch gekennzeichnet, dass** das Buchsengehäuse (54) eine ebene Rückwand (56) aufweist.

## Claims

1. Vehicle axle, in particular for heavy goods vehicles, having an axle body which extends transversely with respect to the direction of travel (F) and which is an axle tube (1), and having two longitudinal struts (2) which are in each case articulatedly connected with their one end (20) to the chassis and fastened with their other end (21) to the axle tube (1) from the front,
**characterized**
**in that** connections (13) for the longitudinal struts (2) are integrally formed on the front side (10) of the axle tube (1), to which connections (13) the ends (21) of the longitudinal struts (2) are welded, with the connections (13) being annular regions (13a) which are turned outward out of the axle tube cross section and which are of preferably circular, elliptical or oval design, and with a rounded portion (13b) being situated at the transition between the front side (10) and the annular region (13a) of the axle tube (1).

2. Vehicle axles according to Claim 1, **characterized in that** the ends (21) of the longitudinal struts (2) are butt-welded to the connections (13).

3. Vehicle axle according to Claim 1, **characterized in that** the longer reference axis (L) of the elliptical or oval annular region (13a) extends parallel to the longitudinal direction of the axle body (1).

4. Vehicle axle according to one of the preceding claims, **characterized in that** the axle body (1) is provided, at least over a part (T) of its length, with indentations (12) which extend in the longitudinal direction of said axle body (1).

5. Vehicle axle according to Claim 4, **characterized in that** the indentations (12) extend exclusively in the region between the connections (13).

6. Vehicle axle according to one of the preceding claims, **characterized in that** the longitudinal struts (2) are provided, on their underside, with a rolling surface (22) which interacts with a lifting device (40).

7. Vehicle axle according to one of the preceding claims, **characterized in that** the longitudinal strut (2) is a hollow body which is open at least in the direction of the axle body (1).

8. Vehicle axle according to Claim 7, **characterized in that** the longitudinal strut (2) is composed of an upper shell (23) and a lower shell (24).

9. Vehicle axle according to one of the preceding claims, **characterized in that** support arms (3) are welded to connections (13) on the rear side (11) of the axle body (1).

10. Vehicle axle according to Claim 9, **characterized in that** the connections (13, 14) for the longitudinal struts (2) and for the support arms (3) are situated opposite one another with respect to the axle body (1).

11. Vehicle axle according to one of the preceding claims, **characterized in that** the front ends (20) of the longitudinal struts are welded in each case to a sleeve housing (54) through which the pin (57) which serves to articulatedly connect the longitudinal strut to the vehicle extends, and **in that** an elastomer element (21) is situated in the intermediate space between the pin (57) and the sleeve housing (54).

12. Vehicle axle according to Claim 11, **characterized in that** the sleeve housing (54) and the elastomer element (12) which is arranged therein have non-circular cross sections.

13. Vehicle axle according to Claim 11 or Claim 12, **characterized in that** the sleeve housing (54) has a planar rear wall (56).

## Revendications

1. Essieu de véhicule, notamment pour véhicule poids-lourd avec un corps d'essieu, s'étendant dans la direction du déplacement (F), qui est constitué par un tube (1), et deux bras longitudinaux (2) qui sont fixés chacun de manière articulée sur le châssis par l'une de leurs extrémités (20) et depuis l'avant, par leur autre extrémité (21), au tube d'essieu (1),
**caractérisé par le fait**
**que** des raccordements (13) pour les bras longitudinaux (2) sont formés sur le côté avant (10) du tube (1), contre lesquels sont soudées les extrémités (21) des bras longitudinaux (2), les raccordements (13) étant des zones annulaires (13a) de forme circulaire, elliptique ou ovale, allant de la section du tube d'essieu vers l'extérieur et
**qu'**un renflement (13b) se trouve dans la transition entre le côté avant (10 et la zone annulaire (13a) du tube d'essieu (1).

2. Essieu de véhicule selon la revendication 1, **caractérisé en ce que** les extrémités (21) des bras longitudinaux (2) sont soudées bord à bord contre les raccordements (13).

3. Essieu de véhicule selon la revendication 1, **caractérisé en ce que** l'axe de référence le plus long (L) de la zone annulaire (13a) elliptique ou ovale s'étend parallèlement à la direction longitudinale du corps d'essieu(1).

4. Essieu de véhicule selon l'une des revendications précédentes, **caractérisé en ce que** le corps d'essieu(1) est pourvu, au moins sur une partie de la longueur (T), d'enfoncements (12) s'étendant sur sa longueur.

5. Essieu de véhicule selon la revendication 4, **caractérisé en ce que** les enfoncements (12) s'étendent exclusivement dans la zone entre les raccordements (13).

6. Essieu de véhicule selon l'une des revendications précédentes, **caractérisé en ce que** les bras longitudinaux (2) sont pourvu d'une surface roulement (22) sur leur côté inférieur qui coopère avec un dispositif de soulèvement (40).

7. Essieu de véhicule selon l'une des revendications précédentes, **caractérisé en ce que** le bras longitudinal (2) est un corps creux ouvert au moins vers le corps d'essieu (1).

8. Essieu de véhicule selon l'une des revendications précédentes, **caractérisé en ce que** le bras longitudinal (2) est assemblé à partir d'une coquille supérieure (23) et une coquille inférieure(24).

9. Essieu de véhicule selon l'une des revendications précédentes, **caractérisé en ce que** des bras de support (3) sont soudés à des raccordements (13) au dos (11) du corps d'essieu (1).

10. Essieu de véhicule selon la revendication 9, **caractérisé en ce que** les raccordements (13, 14) pour les bras longitudinaux (2) et pour les sont situés en face les uns des autres par rapport au corps d'essieu (1).

11. Essieu de véhicule selon l'une des revendications précédentes, **caractérisé en ce que** les extrémités antérieures (20) des bras longitudinaux sont chaque fois soudées contre un boîtier en forme de douille (54) à travers lequel passe l'axe (57) par lequel le bras longitudinal est articulé sur le véhicule et **en ce qu'**un élément élastomère (21) se trouve dans l'espace intermédiaire entre l'axe (57) et le boîtier en forme de douille (54).

12. Essieu de véhicule selon la revendication 11, **caractérisé en ce que** le boîtier en forme de douille (54) et 'élément élastomère (21) qui s'y trouve présentent des sections non rondes.

13. Essieu de véhicule selon la revendication 11 ou la revendication 12, **caractérisé en ce que** le boîtier en forme de douille (54) présente une paroi arrière (56) plane.
